(19) Europäisches Patentamt
European Patent Office
Office européen des brevets

(11) Veröffentlichungsnummer: **0 061 151**
**B1**

(12) **EUROPÄISCHE PATENTSCHRIFT**

(45) Veröffentlichungstag der Patentschrift: **04.12.85**

(51) Int. Cl.⁴: **C 09 B 67/24,** D 06 P 1/38

(21) Anmeldenummer: **82102199.5**

(22) Anmeldetag: **18.03.82**

(54) **Feste Präparationen von wasserlöslichen faserreaktiven Farbstoffen und ihre Verwendung zum Färben oder Bedrucken von Fasermaterialien.**

(30) Priorität: **24.03.81 DE 3111488**

(43) Veröffentlichungstag der Anmeldung: **29.09.82 Patentblatt 82/39**

(45) Bekanntmachung des Hinweises auf die Patenterteilung: **04.12.85 Patentblatt 85/49**

(84) Benannte Vertragsstaaten: **CH DE FR GB IT LI**

(56) Entgegenhaltungen:
**EP - A - 0 014 326**
**FR - A - 2 283 723**
**FR - A - 2 392 089**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Schläfer, Ludwig, Dr., Königsberger Strasse 40, D-6233 Kelkheim (Taunus) (DE)**
Erfinder: **Uhrig, Heinz, Feldbergstrasse 59, D-6374 Steinbach (DE)**

**EP 0 061 151 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die vorliegende Erfindung liegt auf dem technischen Gebiet der faserreaktiven Farbstoffe.

Die französische Patentanmeldungs-Veröffentlichung Nr. 2 283 723 beschreibt wäßrige Dispersionen von wasserunlöslichen Farbmitteln mit Kondensationsprodukten aus Formaldehyd und Alkylnaphthalin-sulfonsäuren, die als Dispergierhilfsmittel zur Dispergierung dieser wasserunlöslichen Farbmittel dienen. Weiterhin sind aus der französischen Patentanmeldungs-Veröffentlichung Nr. 2 392 089 wäßrige Präparationen von faserreaktiven Farbstoffen bekannt, die ebenfalls Kondensationsprodukte aus Formaldehyd und Monoalkyl-naphthalin-sulfonsäuren und bei der Anwendung einen hohen Anteil an Harnstoff enthalten.

Ebenso sind aus der europäischen Patentanmeldungs-Veröffentlichung Nr. 0 014 326 Farbstoffzubereitungen eines faserreaktiven Anthrachinonfarbstoffes bekannt, die als Hilfsmittel ein Kondensationsprodukt aus Formaldehyd und Monoalkyl-napthalin-sulfonsäuren enthalten. Die bekannten Präparationen mit diesen faserreaktiven Farbstoffen besitzen jedoch gewisse technische Mängel, wie eine nicht ausreichende Beständigkeit ihrer salz- und alkalihaltigen wäßrigen Klotz- und Färbeflotten, die sich nicht nur durch deutliche Ausfällungen nach längerem Stehen dieser Flotten bemerkbar macht, sondern insbesondere auch mit einem Farbstärkeverlust der Präparationen einhergeht, selbst dann, wenn — wie zu Anfang — die Ausfällungen nur gering sind.

Mit der vorliegenden Erfindung wurden nunmehr feste, pulverförmige Präparationen von faserreaktiven Farbstoffen gefunden, die sehr gut zur Herstellung von salz- und alkalihaltigen Färbe- und Klotzflotten oder Druckpasten geeignet sind, in denen auch die schwerlöslichen faserreaktiven Farbstoffe eine sehr gute Löslichkeit aufweisen. Die Präparationen sind gekennzeichnet durch den Gehalt eines die Löslichkeit selbst von in salzhaltigen und alkalischen wäßrigen Klotzflotten schwerlöslichen Farbstoffen gewährleistenden Hilfsmittels, nämlich eines Kondensationsproduktes aus einer Dialkylnaphthalin-sulfonsäure oder eines Gemisches zweier oder mehrerer, wie drei, vier oder fünf, Dialkylnaphthalin-sulfonsäuren, mit Formaldehyd; die Alkylgruppen sind vorzugsweise solche mit 1 bis 4 C-Atomen, wie beispielsweise Methyl-, Äthyl-, n-Propyl-, n-Butyl-, i-Butyl- und tert.-Butyl-Gruppen.

Die erfindungsgemäßen Präparationen können die bei Färbepräparationen üblichen Zusätze enthalten, wie beispielsweise Puffersubstanzen oder ein Entstaubungsmittel (in der Regel 0,5 bis 5 Gew.-%, bezogen auf die Gesamtpräparation), wie beispielsweise Natriumacetat, Natriumdihydrogenphosphat und Natriumoxalat als Puffersubstanzen und ein handelsübliches Entstaubungsmittel, beispielsweise auf Basis einer Mineralölemulsion, ferner auch anorganische Alkalisalze (Elektrolyte), wie Natriumchlorid und Natriumsulfat, die beispielsweise bei der Synthese der Farbstoffe oder der Kondensationsmittel anfallen und in diesen Synthesprodukten enthalten sind. Die festen Präparationen sind vorzugsweise durch einen Gehalt an 40 bis 95 Gew.-%, insbesondere bevorzugt 50 bis 85 Gew.-%, an dem wasserlöslichen faserreaktiven Farbstoff gekennzeichnet (anstelle eines faserreaktiven Farbstoffes in den erfindungsgemäßen Präparationen können auch zwei oder mehrere in der angegebenen Gesamtkonzentration in den Präparationen enthalten sein) und weiterhin durch den Gehalt an 5 bis 70 Gew.-%, insbesondere bevorzugt 10 bis 50 Gew.-% eines oder mehrerer der obengenannten Kondensationsprodukte gekennzeichnet.

In den erfindungsgemäßen Präparationen liegen die faserreaktiven Farbstoffe bevorzugt in Form ihrer Alkalimetallsalze, wie Kaliumsalze, insbesondere jedoch Natriumsalze, vor.

Erfindungsgemäß in den Präparationen enthaltene Kondensationsprodukte sind bevorzugt solche, deren Dialkylnaphthalin-sulfonsäure-Komponenten statistisch pro Mol 1 bis 2, vorzugsweise 1 bis 1,5, Sulfonsäuregruppen enthalten und die unter Verwendung von 0,5—4, vorzugsweise 1 bis 3,6, Mol Formaldehyd pro Mol Dialkylnaphthalinsulfonsäure hergestellt wurden. Sie liegen bevorzugt in Form ihrer neutralen Alkalimetallsalze, wie insbesondere Natriumsalze, in den erfindungsgemäßen Präparationen vor.

Von den in den erfindungsgemäßen Präparationen einsetzbaren faserreaktiven Farbstoffen kommen alle diejenigen in Frage, die mindestens eine wasserlöslich machende Gruppe, wie Sulfo-, Sulfato- oder Carboxygruppe, besitzen. Faserreaktive Farbstoffe dieser Art sind zahlreich bekannt. Sie können beispielsweise der Klasse der Monoazofarbstoffe, Disazofarbstoffe oder Polyazofarbstoffe, der Kupfer-, Chrom- und Kobaltkomplex-Monoazofarbstoffe oder -Disazofarbstoffe, weiterhin der Klasse der Anthrachinon-, der Phthalocyanin-, wie insbesondere der Kupfer- oder Nickelphthalocyanin-, der metallhaltigen Formazan-, wie insbesondere der Kupfer- oder Nickelformazan-, oder der Dioxazin-, Azin-, Nitro- und Stilbenfarbstoffe angehören.

Die faserreaktiven Gruppen, die in den faserreaktiven Farbstoffen enthalten sind, sind beispielsweise solche aus der Vinylsulfonreihe, aus der Mono- und Difluor- und Monochlor- und Dichlor-triazinyl-Reihe sowie anderer chlorsubstituierten Acylamiden, wie insbesondere andere halogensubstituierte, bevorzugt chlor- oder fluorsubstituierte, Stickstoffatome enthaltende heterocyclische Reste; solche faserreaktiven Gruppen sind zahlreich in der Literatur bekannt.

Von den faserreaktiven Farbstoffen, die in den erfindungsgemäßen Präparationen enthalten sein können, sind insbesondere bevorzugt die Farbstoffe entsprechend den Formeln (1) bis (12); diese Formeln sind in Form der freien Säure geschrieben. Diese Farbstoffe liegen bevorzugt in Form ihrer Alkalimetallsalze, wie insbesondere Natriumsalze, in den erfindungsgemäßen Präparationen vor.

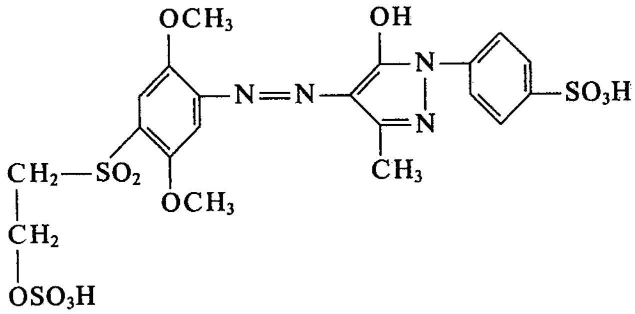

(1)

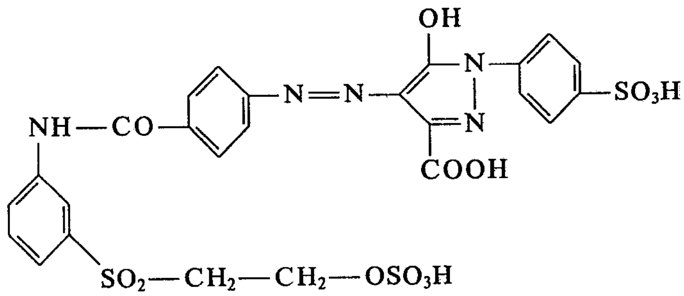

(2)

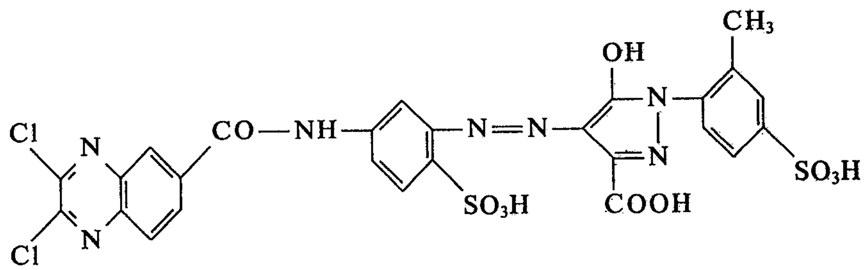

(3)

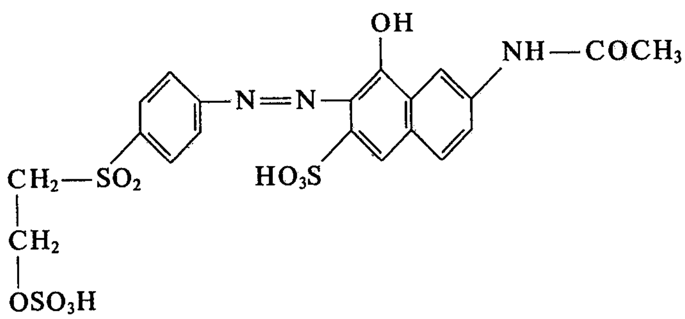

(4)

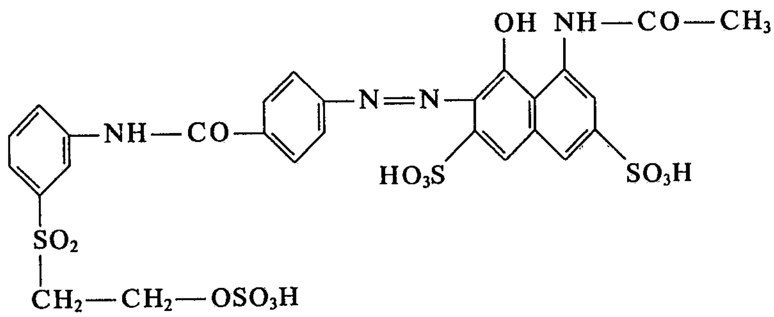

(5)

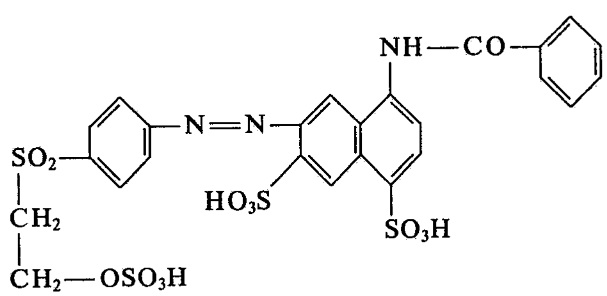

(6)

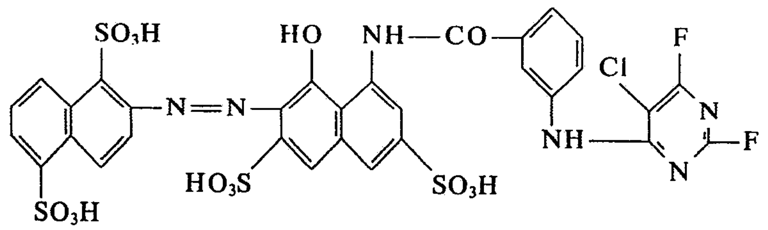

(7)

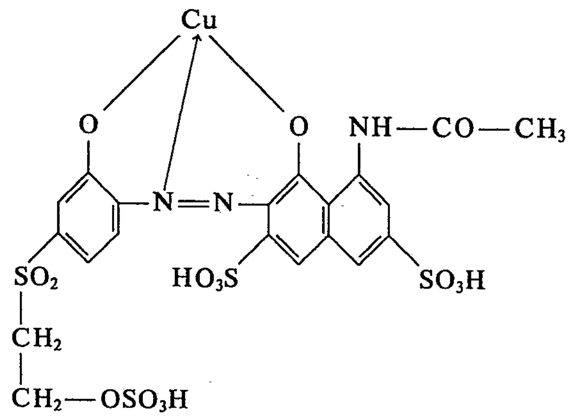

(8)

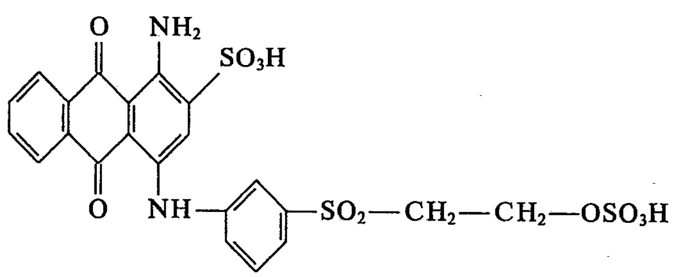

(9)

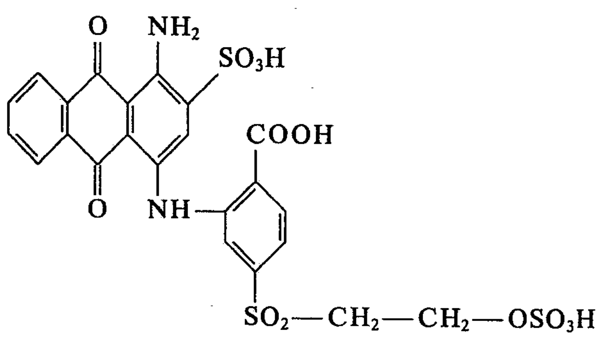

(10)

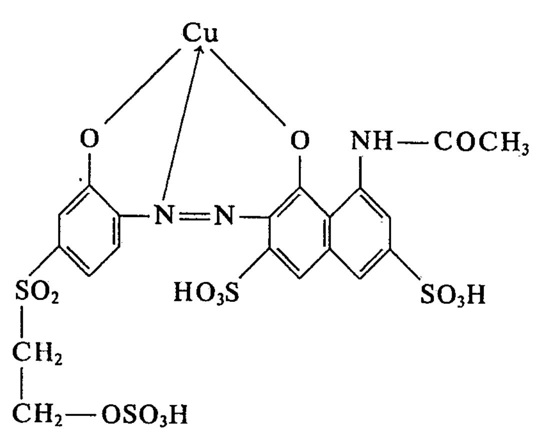

(11)

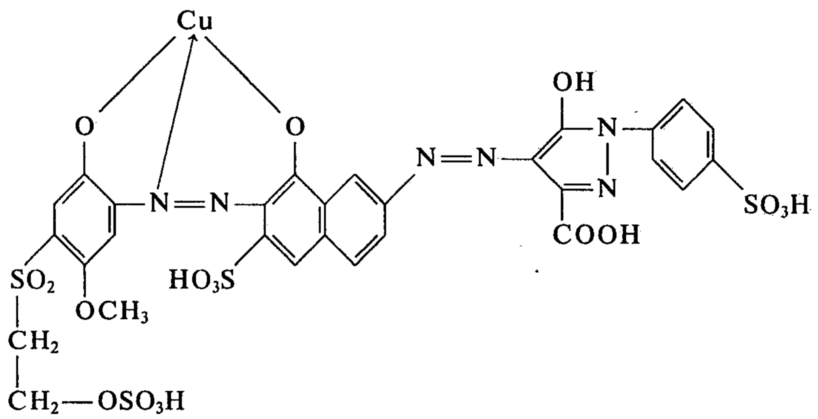

(12)

Mit den erfindungsgemäßen Präparationen können durch Auflösen in Wasser und durch entsprechende, für die Bereitung von salzhaltigen und alkalischen, wäßrigen Färbebädern, Klotzflotten und Druckpasten üblichen Zusätzen auch solche salzhaltigen und alkalischen, wäßrigen Färbeflotten, Färbebäder und Druckpasten hergestellt werden, die eine gute Stabilität besitzen und in denen der faserreaktive Farbstoff, selbst wenn er eine wenig gute Wasserlöslichkeit besitzt, ausreichend gut löslich ist. Solche Zusätze sind neutrale Salze (Elektrolyte), wie Natriumchlorid oder Natriumsulfat, und/oder alkalische Mittel, wie insbesondere Alkalihydroxide und Alkalimetallsalze von schwachen oder mittelstarken Säuren, wie beispielsweise Natriumhydroxid, Natriumcarbonat, Kaliumcarbonat, Natriumbicarbonat, Trinatriumphosphat, Natriumsilikat (Wasserglas) und Natriumacetat. Die erfindungsgemäßen Präparationen eignen sich deshalb sehr gut zur Herstellung von salzhaltigen und alkalischen Färbeflotten, Klotzflotten und Druckpasten für faserreaktive Farbstoffe jeglicher Art, insbesondere vorteilhaft für solche faserreaktiven Farbstoffe mit einer nicht sehr ausgeprägten Wasserlöslichkeit. In üblicher Weise können mit diesen Färbeflotten, Klotzflotten und Druckpasten, somit unter Anwendung der erfindungsgemäßen Präparationen, die für die Färbung mit faserreaktiven Farbstoffen geeigneten Fasermaterialien, wie Wolle und synthetische Polyamide und insbesondere natürliche und regenerierte Cellulosefasern, in tiefen Nuancen egal und stippenfrei gefärbt oder bedruckt werden. Da insbesondere beim Färben aus wäßrig-alkalischen Klotzflotten eine gute Wasserlöslichkeit der eingesetzten faserreaktiven Farbstoffe eine zwingende Voraussetzung ist, weil in dem vergleichsweise geringen Volumen der Klotzflotte neben den alkalischen Mitteln auch größere Farbstoffmengen löslich sein müssen, sind die erfindungsgemäßen Präparationen insbesondere für den Einsatz von denjenigen wichtigen Färbeverfahren mit Reaktivfarbstoffen besonders vorteilhaft geeignet, die unter den Bezeichnungen Einbad-Klotz-Aufdock-, Einbad-Klotz-Trocknungs- und Klotz-Kurzverweil-Verfahren oder ähnlichen Bezeichnungen bekannt sind.

Es war überraschend, daß die erfindungsgemäßen Färbepräparationen Klotzflotten liefern, mit denen auch nach längerer Lagerzeit völlig gleichmäßige, farbtiefe und in der Farbtiefe konstante Färbungen erhältlich sind. Denn Färbepräparationen mit faserreaktiven Farbstoffen, wie die aus der europäischen Patentanmeldungs-Veröffentlichung Nr. 0 014 326 bekannten, die ähnlich gebaute Kondensationsprodukte als Hilfsmittel, wie die Reaktionsprodukte aus Monoalkyl-naphthalin-sulfonsäuren mit Formaldehyd enthalten, gewährleisten in der Regel nicht die Bereitung von solchen lagerstabilen salzhaltigen und alkalischen wäßrigen Klotzflotten, so daß Farbstoffausfällungen erfolgen und gleichmäßig und farbtiefenkonstante Färbungen mit Klotzflotten solcher faserreaktiver Farbstoffe, insbesondere in den obengenannten Klotzverfahren, nicht erhältlich sind.

Die erfindungsgemäßen Präparationen können in üblicher Weise durch Zusammenmischen der verschiedenen Komponenten erhalten werden. So kann man beispielsweise den faserreaktiven Farbstoff und das erwähnte Hilfsmittel, gegebenenfalls zusammen mit einem üblichen Entstaubungsmittel und Elektrolyten, in einer Trommel mechanisch vermischen und/oder in einer Mühle zu einem feinen Pulver vermahlen. Man kann die Zusätze, wie insbesondere das erwähnte Hilfsmittel, dem in üblicher Weise bei der Farbstoffsynthese erhältlichen feuchten Preßkuchen des Farbstoffes in fester Form oder als wäßrige Lösung zusetzen und miteinander vermischen und dieses Gemisch durch Trocknung, vorzugsweise durch Sprühtrocknung, in die erfindungsgemäße feste Präparation überführen.

Die nachfolgenden Beispiele dienen zur Erläuterung der Erfindung. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1

30 Teile eines Farbstoffpulvers mit einem Gehalt von etwa 75% des Farbstoffs der Formel

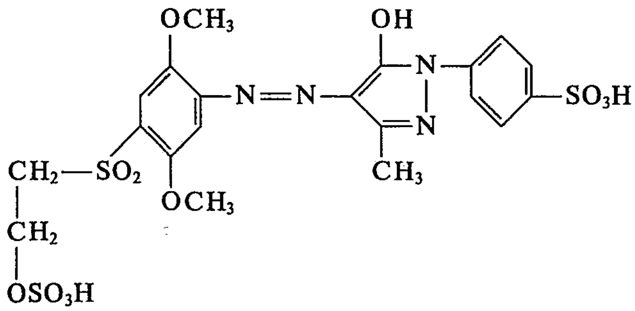

als Natriumsalz und etwa 25% Elektrolyt (Natriumchlorid/Natriumsulfat) sowie 10 Teile eines Kondensationsproduktes aus 0,8 Mol Dibutylnaphthalin-sulfonsäure, 1 Mol Dimethylnaphthalin-sulfonsäure und 3,6 Mol Formaldehyd werden miteinander vermahlen.

Die so erhaltene erfindungsgemäße feste Farbstoffpräparation wird zur Herstellung einer alkalischen, salzhaltigen Klotzflotte in 800 Teilen Wasser gelöst und mit 22 Volumenteilen einer 33%igen wäßrigen Natronlauge und 130 Teilen einer 70%igen wäßrigen Natriumsilikatlösung versetzt. In dieser alkalischen salzhaltigen Klotzflotte ist der Farbstoff auch noch nach einer Stunde vollständig gelöst; es treten keine Ausfällungen auf. Mit der Klotzflotte lassen sich nach den technisch üblichen Applikations- und Fixiermethoden für faserreaktive Farbstoffe, wie insbesondere nach den in der Beschreibung genannten speziellen Klotzverfahren, tiefe und egale Färbungen herstellen.

## Beispiel 2

60 Teile eines Farbstoffpulvers, das etwa 85% des Farbstoffs der Formel

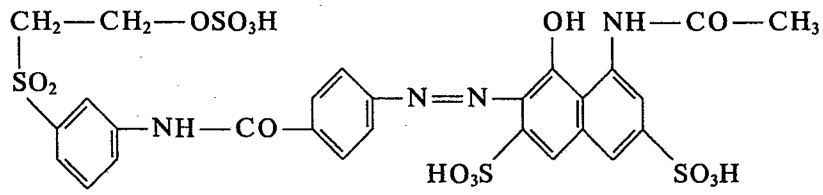

in Form seines Natriumsalzes und etwa 15% Elektrolyt (vorwiegend Natriumchlorid) enthält, werden zusammen mit 10 Teilen eines Kondensationsproduktes aus 1 Mol Dimethylnaphthalin-sulfonsäure und 1 Mol Formaldehyd vermahlen.

Zur Bereitung einer alkalischen salzhaltigen Klotzflotte löst man diese erfindungsgemäße feste Präparation in 770 Teilen Wasser und versetzt die Lösung anschließend mit 22 Volumenteilen einer 33%igen wäßrigen Natronlauge und 130 Teilen einer 70%igen Natriumsilikatlösung. In dieser alkalischen salzhaltigen Klotzflotte bleibt der Farbstoff auch noch nach einer Stunde in Lösung. Mit ihr erhält man nach dem in der Technik für faserreaktive Farbstoffe gebräuchlichen Einbad-Klotzverfahren tiefe und egale Färbungen.

## Beispiel 3

55 Teile des Natriumsalzes der Verbindung der Formel

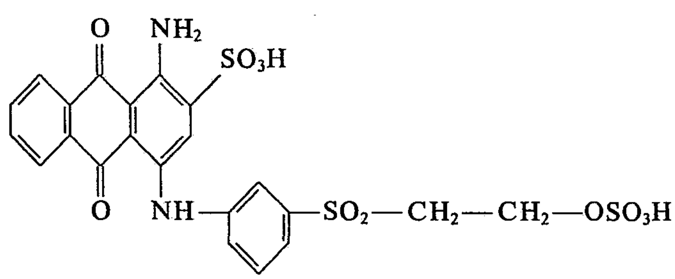

mit einem zusätzlichen Elektrolytgehalt von etwa 22% werden mit 55 Teilen eines Kondensationsproduktes aus einem Mol Dimethylnaphthalin-sulfonsäure und einem Mol Formaldehyd vermahlen.

Zur Bereitung einer alkalischen, salzhaltigen Klotzflotte wird diese erfindungsgemäße feste Präparation in 760 Teilen Wasser gelöst und sodann mit 15 Teilen einer 33%igen wäßrigen Natronlauge und

115 Teilen einer 70%igen wäßrigen Natriumsilikatlösung versetzt. In der so erhaltenen Klotzflotte ist der Farbstoff bei 20–25°C auch noch nach einer Stunde klar gelöst. Infolgedessen erhält man mit dieser Klotzflotte gemäß dem in der Technik üblichen Einbad-Klotz-Verfahren auf Cellulosefasermaterialien tiefe und egale Färbungen.

### Beispiel 4

55 Teile des im Beispiel 3 verwendeten Anthrachinonfarbstoffes mit einem zusätzlichen Elektrolytgehalt von etwa 22% werden mit 50 Teilen eines Kondensationsproduktes aus 0,8 Mol Dibutylnaphthalin-sulfonsäure und 1,0 Mol Dimethylnaphthalin-sulfonsäure mit 3,6 Mol Formaldehyd vermahlen.

Diese erfindungsgemäße feste Präparation wird gemäß Beispiel 3 mit Wasser, Natronlauge und der Natriumsilikatlösung versetzt. Die so hergestellte wäßrige Klotzflotte stellt auch noch nach 90 min bei Raumtemperatur eine klare Lösung dar; eine Farbstoffausfällung tritt nicht auf. Mit ihr werden demgemäß nach dem Einbad-Klotz-Verfahren auf Cellulosefasermaterialien tiefe und egale Färbungen erhalten.

### Beispiel 5

60 Teile eines Farbstoffpulvers mit einem Gehalt von etwa 78% des Farbstoffs der Formel

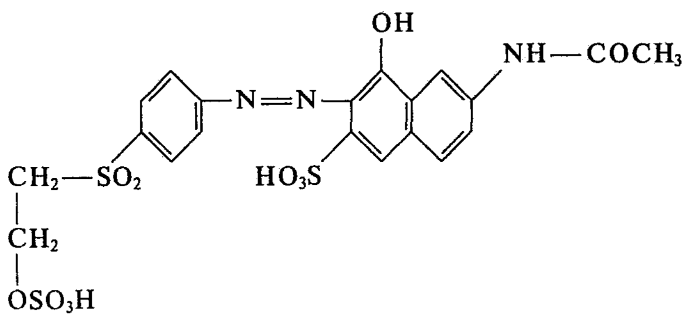

in Form seines Natriumsalzes und einem Gehalt von etwa 22% Elektrolyt (Natriumchlorid) werden zusammen mit 10 Teilen eines Kondensationsproduktes aus 0,8 Mol Dibutylnaphthalin-sulfonsäure, 1,0 Mol Dimethylnaphthalin-sulfonsäure und 3,6 Mol Formaldehyd miteinander vermahlen.

Diese erfindungsgemäße feste Präparation löst man in etwa 900 Teilen Wasser und 16,5 Teilen einer 33%igen wäßrigen Natronlauge. Diese alkalische, salzhaltige Klotzflotte zeigt eine hohe Stabilität; auch nach 3 Stunden ist der Farbstoff noch vollständig in Lösung. Mit ihr werden deshalb nach den in der Technik für faserreaktive Farbstoffe üblichen Einbad-Klotz-Verfahren tiefe und egale Färbungen auf Cellulosefasermaterialien erhalten.

### Vergleichsbeispiel 1

Man verfährt wie im obigen Beispiel 1, ersetzt jedoch das Kondensationsprodukt des Beispiels 1 durch 10 Teile eines Kondensationsproduktes aus 1,0 Mol Monobutylnaphthalinsulfonsäure und 2,0 Mol Formaldehyd. Diese feste Mischung wird gemäß den Angaben des Beispieles 1 mit Wasser, Natronlauge und der Natriumsilikatlösung versetzt. Bereits nach 15 Minuten erfolgt Abscheidung des Farbstoffes; die Klotzflotte liefert nach 15 Minuten demzufolge bei den in der Technik für faserreaktive Farbstoffe üblichen Einbad-Klotz-Verfahren unegale und schwache Färbungen.

### Vergleichsbeispiel 2

40 Teile des im obigen Beispiel 2 verwendeten Farbstoffes werden mit 10 Teilen eines Kondensationsproduktes aus 1,0 Mol Monomethylnaphthalin-sulfonsäure und 2,0 Mol Formaldehyd vermahlen. Diese feste pulverförmige Präparation wird gemäß den Angaben des Beispieles 2 zu einer alkalischen, salzhaltigen Klotzflotte verarbeitet. Bereits nach einer Stunde scheidet sich der Farbstoff als Niederschlag ab, so daß mit dieser Klotzflotte, nach der für faserreaktive Farbstoffe üblichen Anwendungsweise auf einem Baumwollgewebe, schwache und unegale Klotzfärbungen erhalten werden.

Vergleichsbeispiel 3

Man stellt gemäß den Angaben des obigen Beispieles 3 eine feste, pulverförmige Farbstoffpräparation her, ersetzt jedoch das dort verwendete Kondensationsprodukt durch 55 Teile eines Kondensationsproduktes aus 1,0 Mol Monobutylnaphthalin-sulfonsäure und 2,0 Mol Formaldehyd. Diese Präparation wird sodann gemäß den Angaben des Beispieles 3 durch Zugabe von Wasser, der Natronlauge und der Natriumsilikatlösung zu einer salzhaltigen, alkalischen Klotzflotte verarbeitet, aus der sich bei deren Zubereitung nach Zugabe der alkalischen Mittel der Farbstoff sofort teilweise kristallin abscheidet. Mit ihr können somit keine brauchbaren Färbungen erhalten werden.

Vergleichsbeispiel 4

Man stellt gemäß den Angaben des obigen erfindungsgemäßen Beispieles 3 eine feste, pulverförmige Präparation her, verwendet jedoch statt des dort angegebenen Kondensationsproduktes 30 Teile eines Kondensationsproduktes aus 1,0 Mol Monomethylnaphthalin-sulfonsäure und 2,0 Mol Formaldehyd. Diese Präparation wird gemäß den Angaben des Beispieles 3 mit Wasser, der Natronlauge und der Natriumsilikatlösung versetzt. Bei der Zubereitung dieser wäßrigen Klotzflotte scheidet sich, in analoger Weise zu dem Vergleichsbeispiel 3, bereits bei Zugabe der alkalischen Mittel der Farbstoff teilweise kristallin ab. Mit dieser Klotzflotte lassen sich somit keine brauchbaren Färbungen herstellen.

Vergleichsbeispiel 5

Man bereitet eine feste Präparation gemäß den Angaben des erfindungsgemäßen Beispieles 3, ersetzt jedoch das dort verwendete Kondensationsprodukt durch 60 Teile eines Kondensationsproduktes aus 1,0 Mol Monomethylnaphthalin-sulfonsäure und 2,0 Mol Formaldehyd. Diese pulverförmige Präparation wird gemäß den Angaben des Beispieles 3 in eine salzhaltige, alkalische Klotzflotte übergeführt; aus ihr beginnt bereits nach 10 Minuten, sich der Farbstoff teilweise abzuscheiden. Mit dieser Klotzflotte werden somit, beispielsweise auf Cellulosefasern, ebenfalls lediglich schwache und unegale Färbungen erhalten.

Vergleichsbeispiel 6

Man stellt eine feste pulverförmige Präparation gemäß dem obigen erfindungsgemäßen Beispiel 3 her, ersetzt jedoch das dort verwendete Kondensationsprodukt durch 10 Teile eines Kondensationsproduktes aus 1,0 Mol Monomethylnaphthalin-sulfonsäure und 2,0 Mol Formaldehyd. Bereitet man mit dieser Präparation gemäß diesem Beispiel 3 eine alkalische salzhaltige wäßrige Klotzflotte, so scheidet sich auch aus dieser bereits nach 10 Minuten der Farbstoff ab. Mit dieser Klotzflotte lassen sich demgemäß keine brauchbaren Färbungen erhalten.

**Patentansprüche**

1. Feste Präparationen von faserreaktiven Farbstoffen, die mindestens eine wasserlöslich machende Gruppe besitzen, und mit dem Gehalt eines Kondensationsproduktes einer alkylsubstituierten Naphthalinsulfonsäure mit Formaldehyd, dadurch gekennzeichnet, daß dieses Produkt ein Kondensationsprodukt aus einer Dialkylnaphthalinsulfonsäure oder einem Gemisch derselben mit Formaldehyd ist.

2. Präparationen nach Anspruch 1, gekennzeichnet durch den Gehalt von 50 bis 85 Gew.-% eines oder mehrerer faserreaktiver Farbstoffe.

3. Präparationen nach Anspruch 1 oder 2, gekennzeichnet durch den Gehalt von 10 bis 50 Gew.-% eines Kondensationsproduktes einer Dialkylnaphthalin-sulfonsäure oder eines Gemisches derselben mit Formaldehyd.

4. Präparationen nach Anspruch 1, 2 oder 3, dadurch gekennzeichnet, daß das Kondensationsprodukt ein solches von Dialkylnaphthalin-sulfonsäuren mit einem durchschnittlichen Gehalt von 1 bis 1,5 Sulfonsäuregruppen und der 1- bis 3,6fach molaren Menge an Formaldehyd ist.

5. Präparationen nach Anspruch 1, 2, 3 oder 4, dadurch gekennzeichnet, daß der faserreaktive Farbstoff das Alkalimetallsalz der Verbindung der Formel

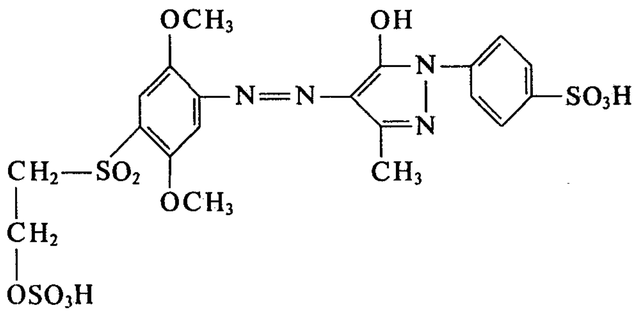

ist.

6. Präparationen nach Anspruch 1, 2, 3 oder 4, dadurch gekennzeichnet, daß der faserreaktive Farbstoff das Alkalimetallsalz der Verbindung der Formel

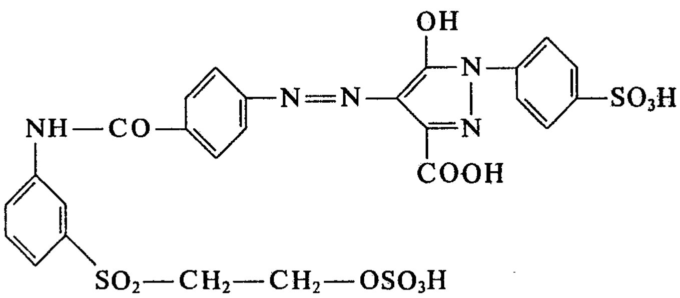

ist.

7. Präparationen nach Anspruch 1, 2, 3 oder 4, dadurch gekennzeichnet, daß der faserreaktive Farbstoff das Alkalimetallsalz der Verbindung der Formel

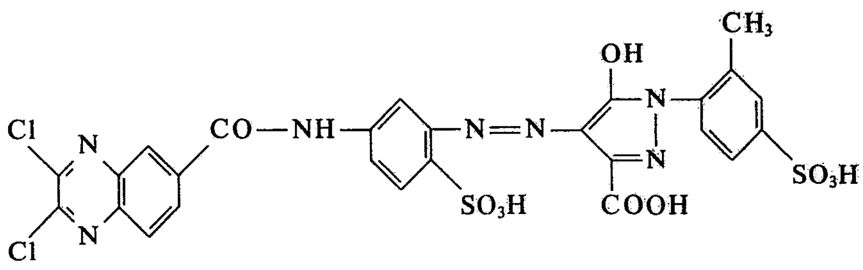

ist.

8. Präparationen nach Anspruch 1, 2, 3 oder 4, dadurch gekennzeichnet, daß der faserreaktive Farbstoff das Alkalimetallsalz der Verbindung der Formel

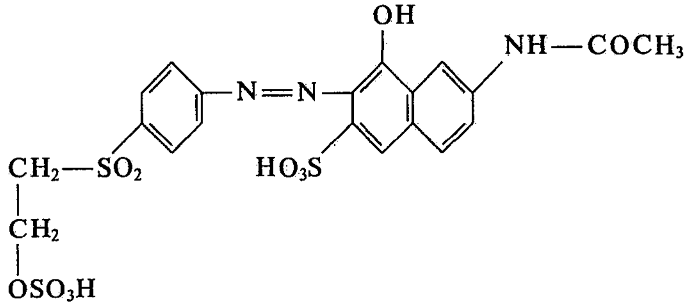

ist.

9. Präparationen nach Anspruch 1, 2, 3 oder 4, dadurch gekennzeichnet, daß der faserreaktive Farbstoff das Alkalimetallsalz der Verbindung der Formel

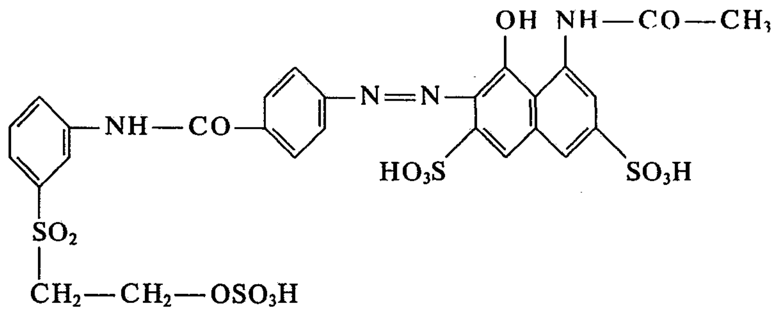

ist.

10. Präparationen nach Anspruch 1, 2, 3 oder 4, dadurch gekennzeichnet, daß der faserreaktive Farbstoff das Alkalimetallsalz der Verbindung der Formel

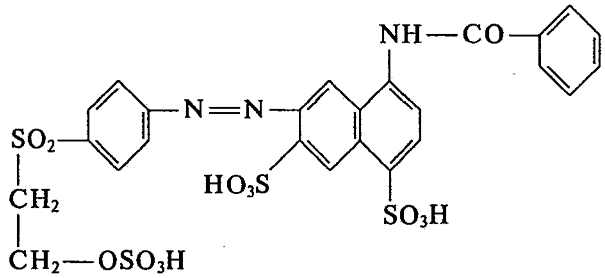

ist.

11. Präparationen nach Anspruch 1, 2, 3 oder 4, dadurch gekennzeichnet, daß der faserreaktive Farbstoff das Alkalimetallsalz der Verbindung der Formel

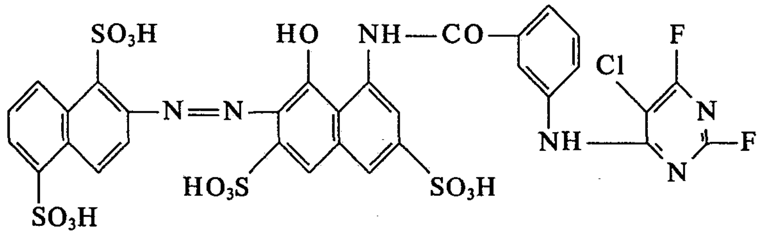

ist.

12. Präparationen nach Anspruch 1, 2, 3 oder 4, dadurch gekennzeichnet, daß der faserreaktive Farbstoff das Alkalimetallsalz der Verbindung der Formel

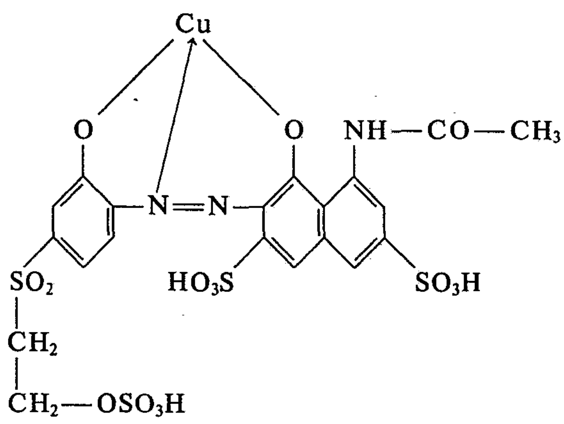

ist.

13. Präparationen nach Anspruch 1, 2, 3 oder 4, dadurch gekennzeichnet, daß der faserreaktive Farbstoff das Alkalimetallsalz der Verbindung der Formel

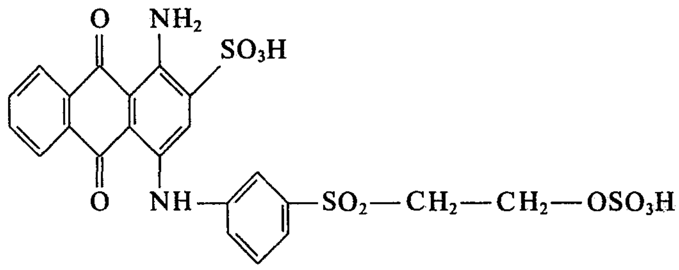

ist.

14. Präparationen nach Anspruch 1, 2, 3 oder 4, dadurch gekennzeichnet, daß der faserreaktive Farbstoff das Alkalimetallsalz der Verbindung der Formel

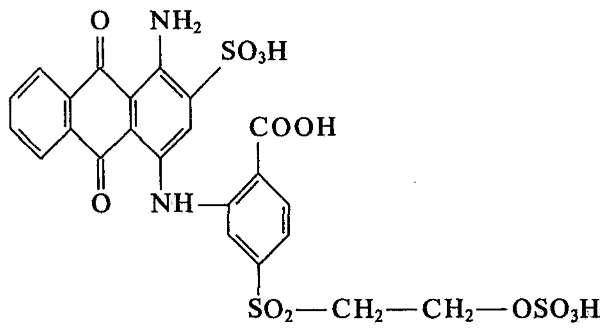

ist.

15. Präparationen nach Anspruch 1, 2, 3 oder 4, dadurch gekennzeichnet, daß der faserreaktive Farbstoff das Alkalimetallsalz der Verbindung der Formel

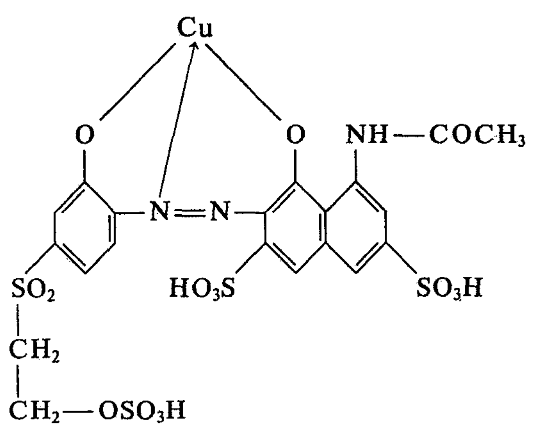

ist.

16. Präparationen nach Anspruch 1, 2, 3 oder 4, dadurch gekennzeichnet, daß der faserreaktive Farbstoff das Alkalimetallsalz der Verbindung der Formel

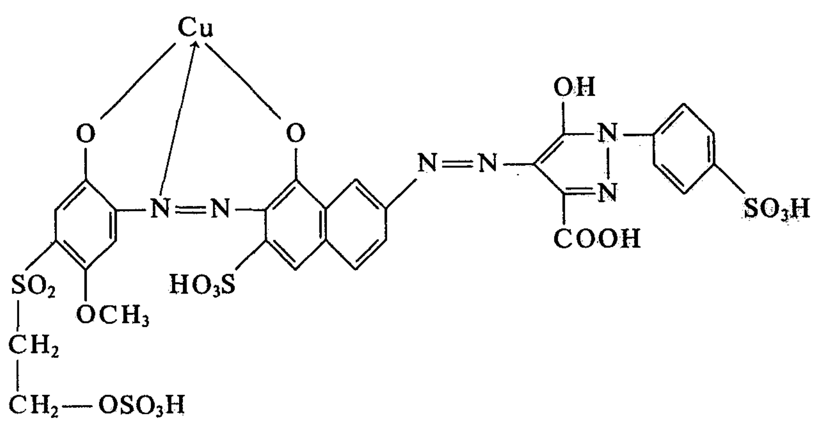

ist.

17. Verwendung der Präparationen von Anspruch 1 zur Herstellung von stabilen alkalischen wäßrigen Färbeflotten, insbesondere Klotzflotten.

## Claims

1. Solid compositions of fiber-reactive dyestuffs containing at least one water-solubilizing group, and with the content of a condensation product of an alkyl-substituted naphthalene sulfonic acid with formaldehyde, characterized by that this product is a condensation product formed from a dialkylnaphthalene sulfonic acid, or a mixture thereof, with formaldehyde.

2. Compositions according to claim 1 characterized by the content of 50 to 85% by weight of one or more fibre-reactive dyestuffs.

3. Compositions according to claim 1 or 2, characterized by the content of 10 to 50% by weight of a condensation product formed from a dialkylnaphthalene sulfonic acid, or a mixture thereof, with formaldehyde.

4. Compositions according to claim 1, 2 or 3, characterized by that the condensation product is a product formed from dialkylnaphthalene sulfonic acids containing, on average, 1 to 1.5 sulfonic acid groups, with a 1- to 3.6-fold molar quantity of formaldehyde.

5. Compositions according to claim 1, 2, 3 or 4, characterized by that the fiber-reactive dyestuff is the alkali metal salt of the compound of the formula

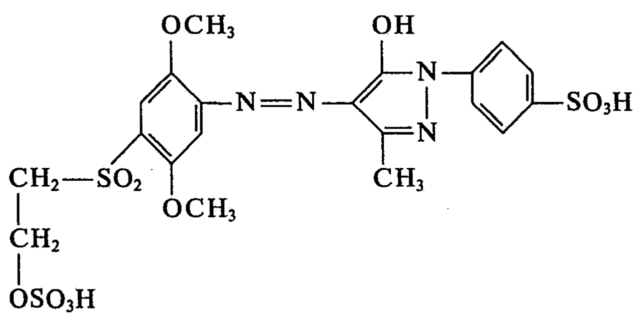

6. Compositions according to claim 1, 2, 3 or 4, characterized by that the fiber-reactive dyestuff is the alkali metal salt of the compound of the formula

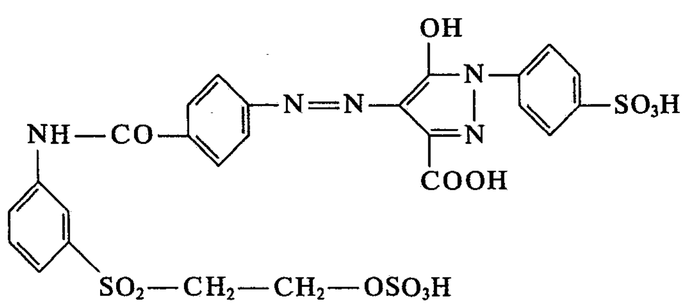

7. Compositions according to claim 1, 2, 3 or 4, characterized by that the fiber-reactive dyestuff is the alkali metal salt of the compound of the formula

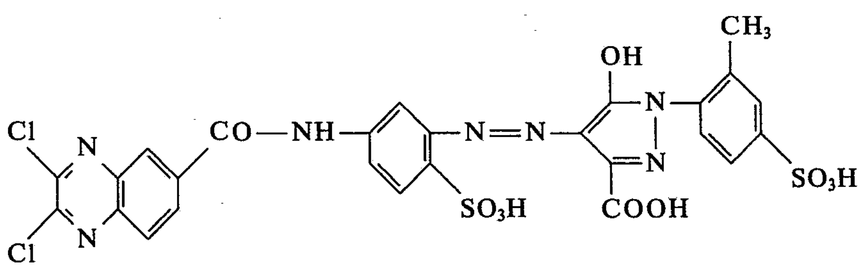

8. Compositions according to claim 1, 2, 3 or 4, characterized by that the fiber-reactive dyestuff is the alkali metal salt of the compound of the formula

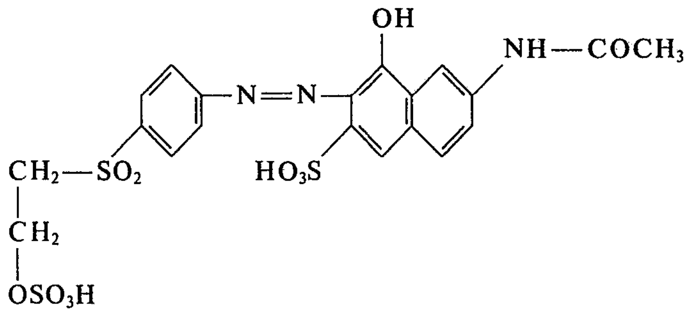

9. Compositions according to claim 1, 2, 3 or 4, characterized by that the fiber-reactive dyestuff is the alkali metal salt of the compound of the formula

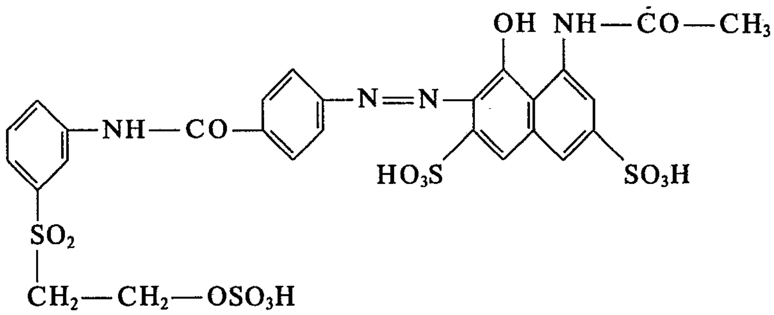

10. Compositions according to claim 1, 2, 3 or 4, characterized by that the fiber-reactive dyestuff is the alkali metal salt of the compound of the formula

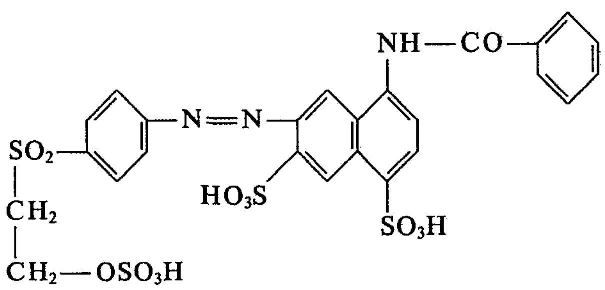

11. Compositions according to claim 1, 2, 3 or 4, characterized by that the fiber-reactive dyestuff is the alkali metal salt of the compound of the formula

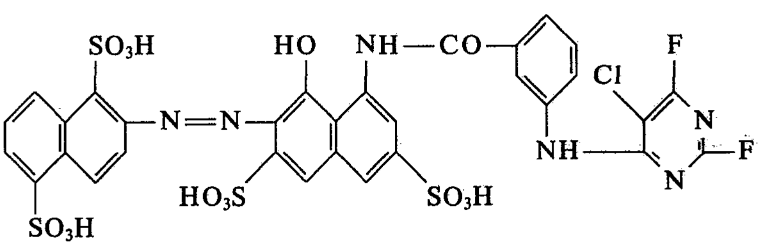

12. Compositions according to claim 1, 2, 3 or 4, characterized by that the fiber-reactive dyestuff is the alkali metal salt of the compound of the formula

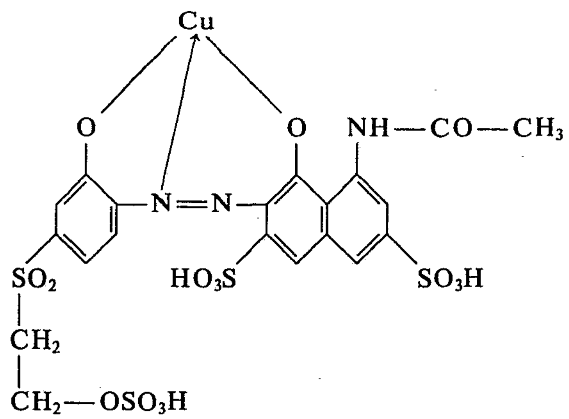

13. Compositions according to claim 1, 2, 3 or 4, characterized by that the fiber-reactive dyestuff is the alkali metal salt of the compound of the formula

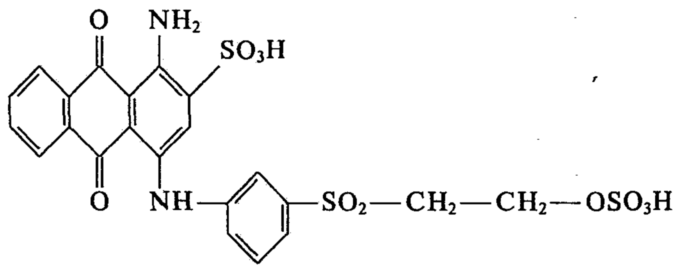

14. Compositions according to claim 1, 2, 3 or 4, characterized by that the fiber-reactive dyestuff is the alkali metal salt of the compound of the formula

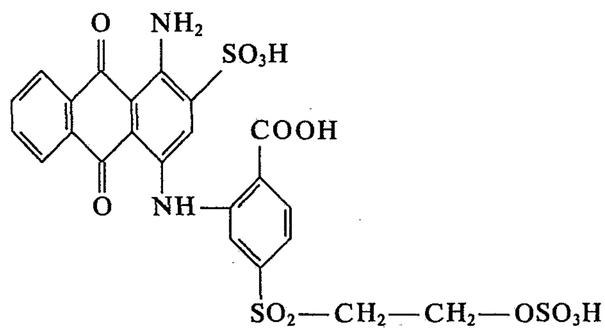

15. Compositions according to claim 1, 2, 3 or 4, characterized by that the fiber-reactive dyestuff is the alkali metal salt of the compound of the formula

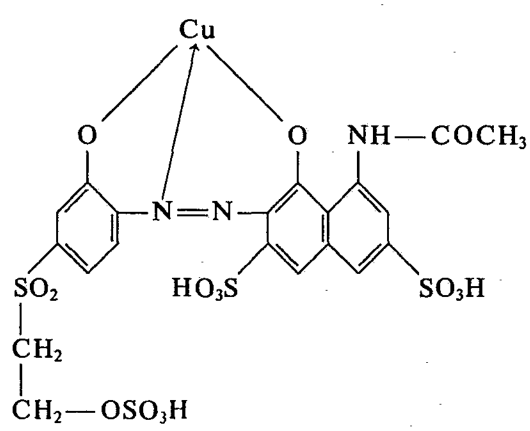

16. Compositions according to claim 1, 2, 3 or 4, characterized by that the fiber-reactive dyestuff is the alkali metal salt of the compound of the formula

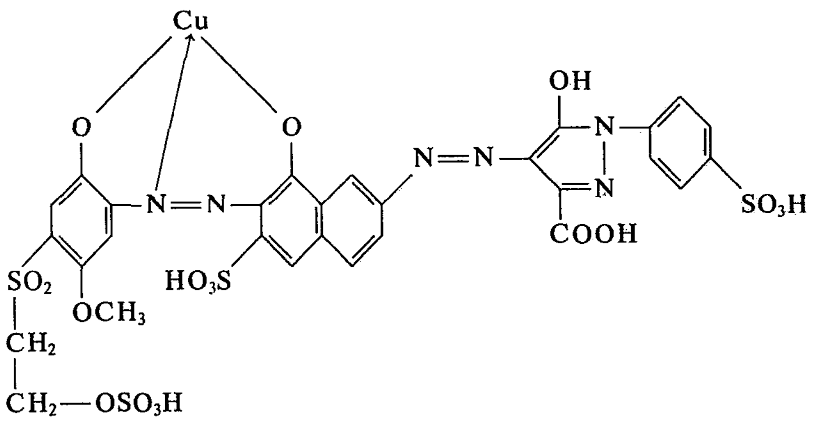

17. The use of the compositions of claim 1 for the preparation of stabile alkaline aqueous dyeing liquors, in particular padding liquors.

## Revendications

1. Compositions solides de colorants réactifs envers les fibres, les colorants possèdant au moins un radical hydrosolubilisant, avec la teneur d'un produit de condensation entre un acide alkylnaphtalène-sulfonique et le formaldéhyde, compositions caractérisées en ce que ce produit est un produit de condensation entre un acide dialkylnaphtalène sulfonique, ou un mélange de plusieurs de ces acides, et le formaldéhyde.

2. Compositions selon la revendication 1, caractérisées en ce qu'elles contiennent de 50 à 85% en poids d'un ou de plusieurs colorants réactifs.

3. Compositions selon l'une des revendications 1 et 2, caractérisées en ce qu'elles contiennent de 10 à 50% en poids d'un produit de condensation entre un acide dialkylnaphtalène-sulfonique, ou un mélange de plusieurs de ces acides, et le formaldéhyde.

4. Compositions selon l'une quelconque des revendications 1 à 3, caractérisées en ce que le produit de condensation est formé à partir d'acides dialkylnaphtalène-sulfoniques contenant en moyenne de 1 à 1,5 radicaux sulfo et d'une quantité molaire de 1 à 3,6 fois plus grande de formaldéhyde.

5. Compositions selon l'une quelconque des revendications 1 à 4, caractérisées en ce que le colorant réactif est un sel de métal alcalin du composé de formule:

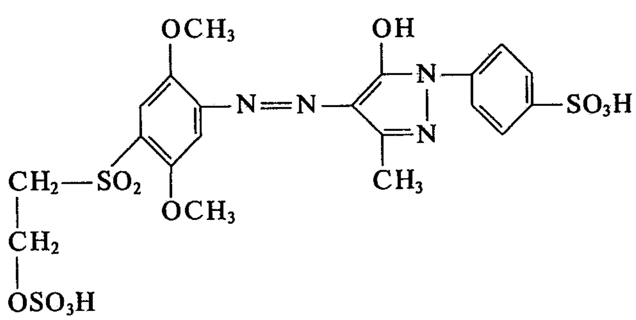

6. Compositions selon l'une quelconque des revendications 1 à 4, caractérisées en ce que le colorant réactif est un sel de métal alcalin du composé de formule:

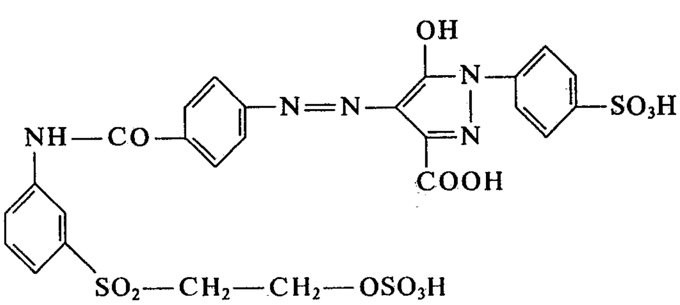

7. Compositions selon l'une quelconque des revendications 1 à 4, caractérisées en ce que le colorant réactif est un sel de métal alcalin du composé de formule:

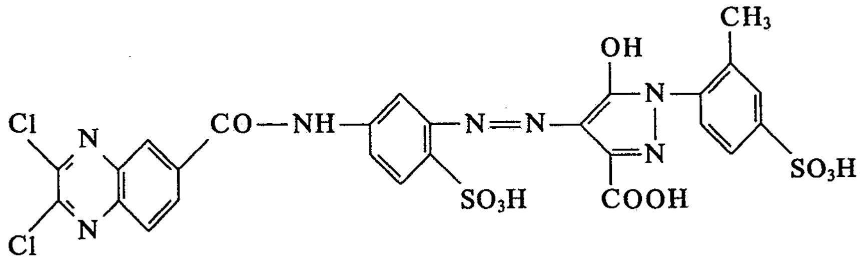

8. Compositions selon l'une quelconque des revendications 1 à 4, caractérisées en ce que le colorant réactif est un sel de métal alcalin du composé de formule:

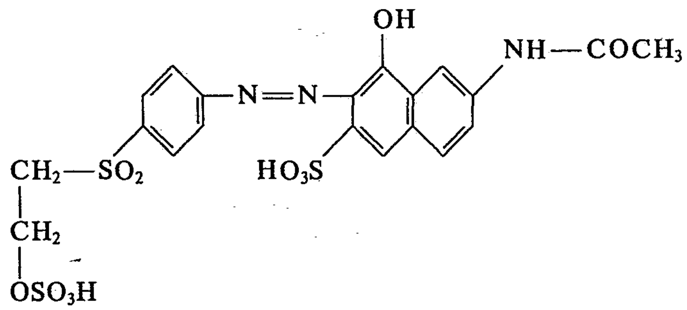

9. Compositions selon l'une quelconque des revendications 1 à 4, caractérisées en ce que le colorant réactif est un sel de métal alcalin du composé de formule:

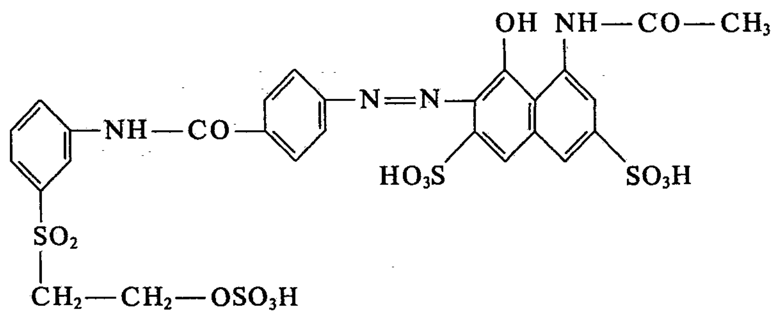

10. Compositions selon l'une quelconque des revendications 1 à 4, caractérisées en ce que le colorant réactif est un sel de métal alcalin du composé de formule:

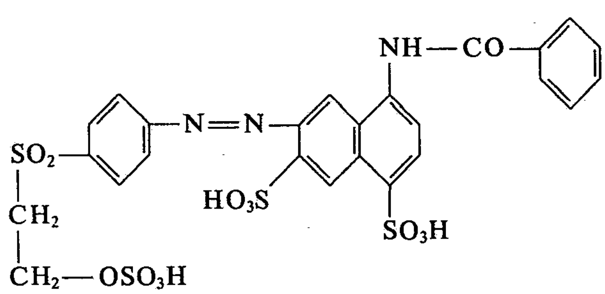

11. Compositions selon l'une quelconque des revendications 1 à 4, caractérisées en ce que le colorant réactif est un sel de métal alcalin du composé de formule:

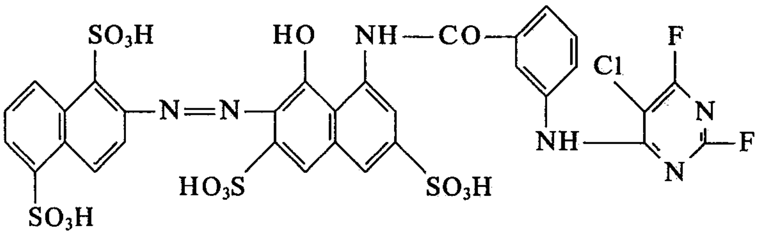

12. Compositions selon l'une quelconque des revendications 1 à 4, caractérisées en ce que le colorant réactif est un sel de métal alcalin du composé de formule:

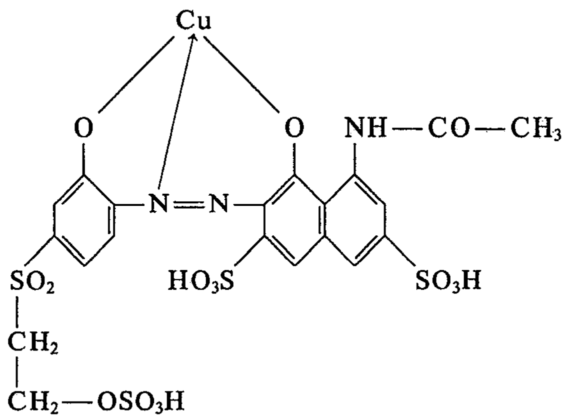

13. Compositions selon l'une quelconque des revendications 1 à 4, caractérisées en ce que le colorant réactif est un sel de métal alcalin du composé de formule:

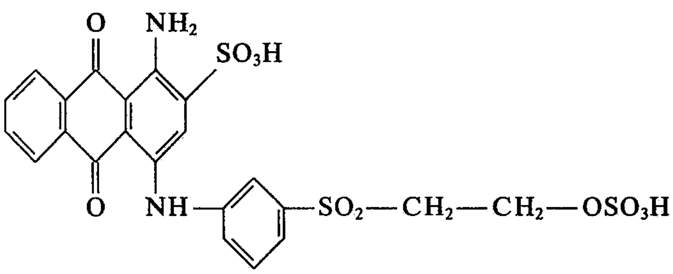

14. Compositions selon l'une quelconque des revendications 1 à 4, caractérisées en ce que le colorant réactif est un sel de métal alcalin du composé de formule:

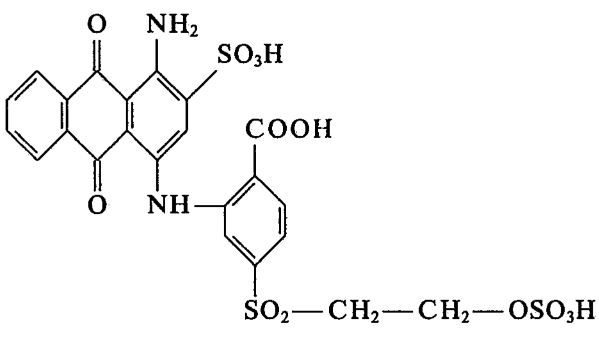

15. Compositions selon l'une quelconque des revendications 1 à 4, caractérisées en ce que le colorant réactif est un sel de métal alcalin du composé de formule:

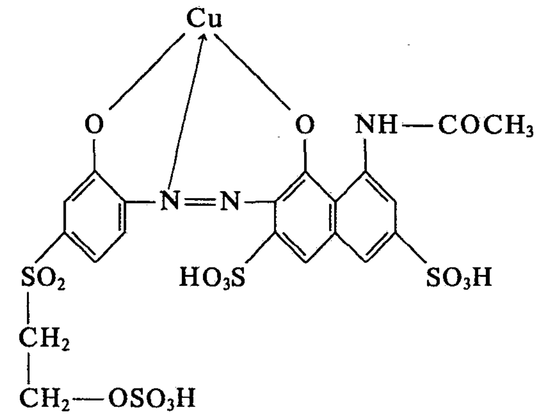

16. Compositions selon l'une quelconque des revendications 1 à 4, caractérisées en ce que le colorant réactif est un sel de métal alcalin du composé de formule:

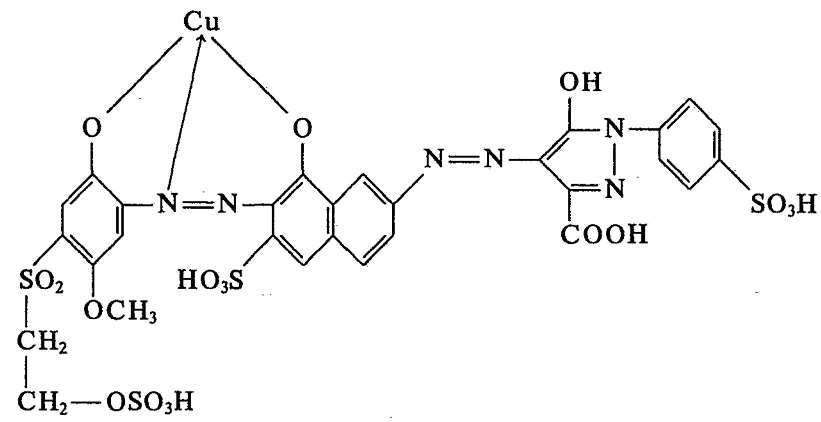

17. Application des compositions de la revendication 1 pour préparer des bains de teinture aqueux alcalins stables, en particulier des bains de foulardage.